# EUROPEAN PATENT SPECIFICATION

(11) **EP 3 390 058 B1**
(45) Date of publication and mention of the grant of the patent: **20.05.2020**
(21) Application number: 16874107.2
(22) Date of filing: 05.12.2016
(51) Int. Cl.: B22F 3/105, B29C 64/153, B29C 64/329, B29C 64/236, B29C 64/282

(54) **3D PRINTING APPARATUS**
3D-DRUCKVERFAHRENVORRICHTUNG
PROCÉDÉ ET APPAREIL D'IMPRESSION 3D

(30) Priority: 18.12.2015 AU 2015905268
(43) Date of publication of application: 24.10.2018
(73) Proprietor: Aurora Labs Limited, Western Australia 6163 (AU)
(72) Inventor: BUDGE, David, Applecross Western Australia 6153 (AU)
(74) Representative: Aronova
(86) International application number: PCT/AU2016/000388
(87) International publication number: WO 2017/100816

(56) References cited:
- EP-A2- 2 583 774
- WO-A1-2005/080010
- US-A- 5 160 822
- US-A- 5 837 960
- US-A1- 2013 108 726
- US-A1- 2015 314 528
- US-B2- 6 811 744

## Description

### FIELD OF INVENTION

The present invention relates to a 3D printing apparatus.

More particularly, the present invention relates to a 3D apparatus adapted for manufacturing objects at high speed.

### BACKGROUND ART

Three-dimensional (3D) printed parts result in a physical object being fabricated from a 3D digital image by laying down consecutive thin layers of material.

Typically these 3D printed parts can be made by a variety of means, such as selective laser melting or sintering, which operate by having a powder bed onto which an energy beam is projected to melt the top layer of the powder bed so that it welds onto a substrate or a substratum. This melting process is repeated to add additional layers to the substratum to incrementally build up the part until completely fabricated.

These printing methods are significantly time consuming to perform and it may take several days, or weeks, to fabricate a reasonable sized object. The problem is compounded for complex objects comprising intricate component parts. This substantially reduces the utility of 3D printers and is one of the key barriers currently impeding large-scale adoption of 3D printing by consumers and in industry.
Examples of known 3D printing devices include those described in US patent publication US 2013/0108726 A1, and European patent specification EP 2583774 B1. US 2013/0108726 A1 discloses a means to produce a three-dimensional component by applying successive layers of curable material onto a substrate and selectively curing regions of each successive layer so that the cured portions of consecutive layers of material produce the three-dimensional product. EP2583774 B1 discloses a means to relieve stress within a part created during manufacturing of a 3D printed product. The specification further discloses an energy beam being used to melt layers of powdered metal to form a desired part.

The present invention attempts to overcome, at least in part, the aforementioned disadvantages of previous 3D printing devices.

### SUMMARY OF THE INVENTION

In accordance with one aspect of the present invention, there is provided a printing apparatus for printing a three-dimensional object, comprising:
an operative surface;
at least one supply hopper for depositing layers of powder onto the operative surface; and
an energy source for emitting at least one energy beam onto the layers of powder, wherein the supply hopper and energy source are configured such that when a topmost layer of powder is being deposited onto an underlying layer of powder on the operative surface:
   the direction that the supply hopper is moving in while depositing the topmost layer is different to the direction that the supply hopper moved in when it deposited the underlying layer; and
   at least one energy beam is emitted onto the topmost layer and at least one further energy beam is emitted onto the underlying layer simultaneously to melt, fuse or sinter the topmost and underlying layers simultaneously.

The apparatus may comprise a levelling means for substantially levelling a layer of powder deposited on the operative surface.

The levelling means may comprise a blade that, in use, periodically scrapes an upper surface of a layer of powder.

The levelling means may comprise an electrostatic charging means.

The levelling means may comprise a vibration generation means for applying vibrational forces to particles comprised in the layer of powder.

The vibration generation means may comprise a mechanical vibration generator.

The vibration generation means may comprise an ultra-sonic vibration generator.

The apparatus may comprise a scanning means for determining a position, velocity and/or size of one or more particles comprised in the powder when the, or each, particle is travelling between the supply hopper and the operative surface.

The scanning means may be adapted to measure the airborne density of the powder.

The scanning means may be adapted to measure a volume of powder deposited on the operative surface.

The scanning means may be adapted to measure a level of the powder deposited on the operative surface.

The scanning means may be adapted to measure a topology of a powder layer or part thereof.

The scanning means may be adapted to measure a chemical composition of a powder layer or part thereof.

The scanning means may be adapted to measure a temperature of each powder layer or part thereof.

### BRIEF DESCRIPTION OF DRAWINGS

The present invention will now be described, by way of example, with reference to the accompanying drawings, in which:
Figure 1 is a side schematic view of a conventional 3D printing apparatus known in the art;
Figure 2 is a side schematic view of a 3D printing apparatus according to a first embodiment of the invention;
Figure 3 is a further side schematic view of the 3D printing apparatus of Figure 2; and
Figure 4 is a side schematic view of a 3D printing apparatus according to a second embodiment of the invention.

### DETAILED DESCRIPTION OF THE DRAWINGS

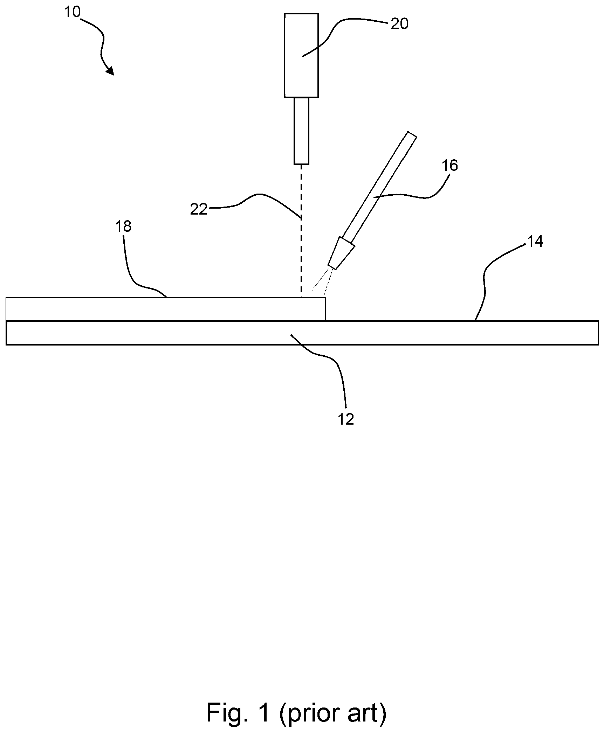

Referring to Figure 1, there is shown a schematic representation of a conventional 3D printing apparatus 10 known in the art. The apparatus 10 comprises a substrate 12 with an operative surface 14 on which a printed object is to be fabricated by 3D printing.

The apparatus 10 further comprises a supply hopper 16 that deposits a single layer of powder 18 onto the operative surface 14.

An energy gun 20 (commonly a laser or electron gun) emits an energy beam 22 onto the layer of powder 18 causing it to melt or sinter selectively to form an individual layer of the 3D object. The process is repeated to add additional layers and incrementally build up the object until it is completed.

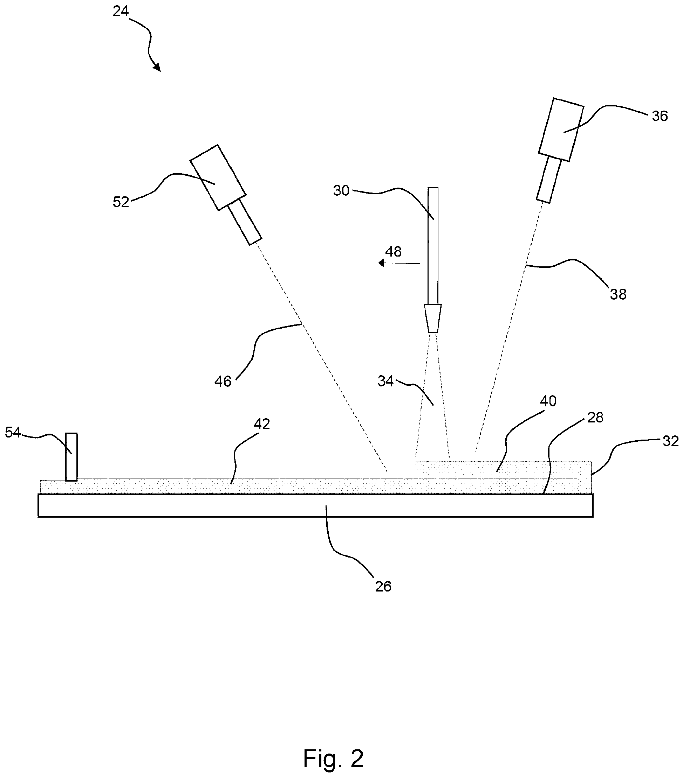

Referring to Figure 2, there is shown a schematic representation of a 3D printing apparatus 24 according to a first embodiment of the present invention.

The apparatus 24 comprises an operative surface 28, at least one supply hopper 30 for depositing layers 32 of powder 34 onto the operative surface 28 and an energy source for emitting at least one energy beam 38 onto the layers of powder 32. The supply hopper 30 and energy source are configured such that when a topmost layer of powder 40 is being deposited onto an underlying layer of powder 42 on the operative surface 28, the direction that the supply hopper 30 is moving in while depositing the topmost layer 40 is different to the direction that the supply hopper 30 moved in when it deposited the underlying layer 42, and at least one energy beam 38 is emitted onto the topmost layer 40 and at least one further energy beam 46 is emitted onto the underlying layer 42 simultaneously to melt, fuse or sinter the topmost and underlying layers 40,42 to an underlying powder layer or substrate simultaneously.

More particularly, the apparatus 24 comprises a substrate 26 which forms the operative surface 28 on which a printed object is to be fabricated by 3D printing. In use, the supply hopper 30 travels in alternating directions, transverse to the operative surface 28, when depositing each layer of powder. In Figure 2, for example, the apparatus 24 is shown in a state whereby a first layer of powder 42 has been deposited in full and the supply hopper 30 is actively depositing a second layer of powder 40 overlaying the first layer 42. The supply hopper 30 is shown currently traveling in the direction indicated by reference numeral 49 while the second, overlaying layer of powder 40 is being formed.

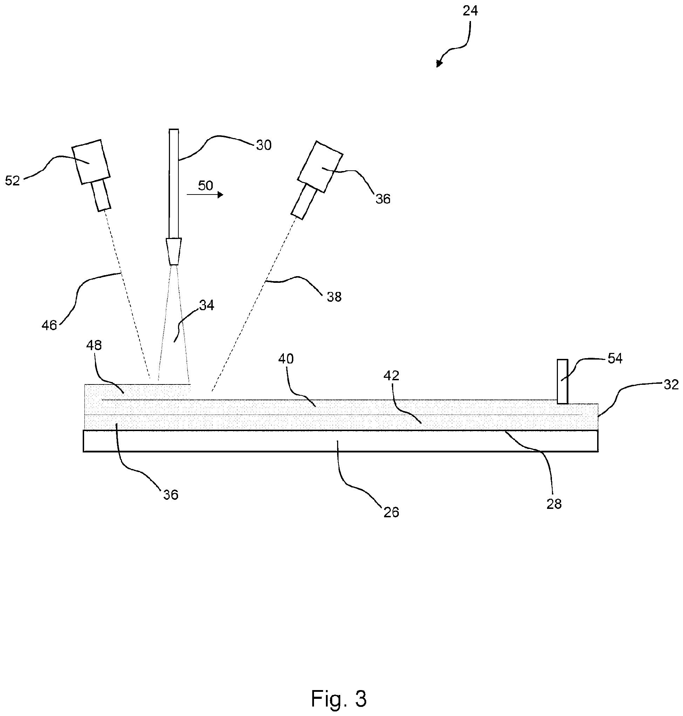

In Figure 3, the apparatus 24 is shown in a further state whereby the first and second layers of powder 42,40 have both been deposited in full and the supply hopper 30 is actively depositing a third layer of powder 48 immediately above the second layer 40. The supply hopper 30 is shown currently traveling in the direction indicated by reference numeral 50 while forming the third layer of powder 48, which is different to the previous direction 49 that it travelled in.

The supply hopper 30 travels back and forth repeatedly, in an oscillating path, transverse to the operative surface 28, to incrementally deposit the powder layers 32 onto the operative surface 28. Preferably, the path followed by the supply hopper 30 is substantially sinusoidal in at least one dimension transverse to the planar operative surface 28. It is anticipated, however, that the supply hopper 30 may follow alternative oscillating paths which are all within scope of the present invention.

The apparatus 24 further comprises an energy source which, in the first embodiment of the invention shown in Figures 2 and 3, comprises a first energy gun 36 for emitting a first energy beam 38 onto the powder layers 32 and a second energy gun 52 for emitting a second energy beam 46 onto the powder layers 32 to melt or sinter the powder selectively, thereby forming part of the 3D object.

The two energy guns 36,52 operate such that the first energy beam 38 is directed onto, and works on, the topmost layer of powder that is being actively deposited by the supply hopper 30. Meanwhile, the second energy beam 46 is simultaneously directed onto, and works on, a layer of powder underlying the topmost layer.

By way of example, in Figure 2, the first energy beam 38 is shown being directed onto the second layer of powder 40, which forms the topmost layer of powder that is being actively deposited by the supply hopper 30. Meanwhile, the second energy beam 46 is shown being directed simultaneously onto the first layer of powder 42 that has previously been deposited, in full, and is immediately underlying the second layer of powder 40.

By way of further example, in Figure 3 the second energy beam 46 is shown being directed onto the third layer of powder 48 which, at this point in time, forms the topmost layer of powder being actively deposited by the supply hopper 30. Meanwhile, the first energy beam 38 is shown being directed, simultaneously, onto the second layer of powder 46 which, at this point in time, has now been deposited in full and forms a layer underlying the third layer of powder 48.

The present invention enables two layers of powder to be effectively operated on by the energy source simultaneously, leading to a corresponding two-fold increase in printing productivity.

The energy source used in the apparatus 24 can be any one of a laser beam, a collimated light beam, a micro-plasma welding arc, a microwave beam, an ultrasonic beam, an electron beam, a particle beam or other suitable energy beam.

In embodiments of the invention that make use of electron beam energy sources, the printing apparatus 24 (including the operative surface 28) may be contained and operated wholly inside a vacuum chamber to facilitate propagation of the electron beam onto the layers of powder.

The effectiveness of the present invention substantially relies on each powder layer 32 being formed in a controlled manner. It is, in particular, important to ensure that the layers formed have uniform thicknesses and top surfaces that are substantially level when the powder layers 32 are being worked on by the energy source.

Due to the nature of powder particles, they often tend to roll across the operative surface 28 when deposited thereon. This is normally either due to the shape of the powder particles, e.g. roughly round shaped powder particles that bounce roll on the operative surface 28 and collide with other powder particles already located thereon, or the rolling can be caused by the force of the gas feed carrying the powder particles from the powder supply 30, or the rolling can be caused by gravity by the powder particles rolling off a "heap" if too many powder particles are deposited at the same position.

It is also known that the thickness of a layer of powder 32 can be reduced after the layer has been worked on by the energy source due to, for example, particle shrinkage. The reduction in thickness may detrimentally affect layers of powder subsequently deposited by the supply hopper 30 and/or the resultant 3D object that is fabricated.

The apparatus 24, therefore, additionally comprises a levelling means for substantially levelling each powder layer 32 during operation.

In the embodiment disclosed in the Figures, the levelling means comprises a blade 54 that, in use, is periodically scraped over the top surface of a layer of powder 32 in order to modify its thickness, as may be necessary, and to ensure that its top surface is kept substantially level.

The blade 54 is controlled using mechanical control means and control electronics (not shown) driven by software or firmware implementing an algorithm for controlling the position, speed and orientation of the blade 54.

The algorithm implemented may cause the blade 54 to operate selectively on any layer of powder deposited, either in whole or in part, simultaneously with or independently to the operation of the energy guns 36,52.

For example, in Figure 2 the blade 54 is shown operating on the first layer of powder 42 that has been deposited in full, while the first and second energy guns 52,36 are operating, respectively, on the first and second powder layers 42, 40.

In Figure 3, the blade 54 is shown operating on the second layer of powder 40 that, at this point in time, has been deposited in full, while the first and second energy guns 52,36 are operating, respectively, on the second and third powder layers 40, 48.

Instead of or in addition to the blade 54, the levelling means used by the apparatus 24 may, alternatively, comprise a vibration generation means (not shown) for applying vibrational forces to a layer of powder 32 that has yet to be melted or sintered by the energy source. These vibrational forces cause individual particles in the powder layers 32 to vibrate which, in turn, causes them to become dynamic. The vibrational forces may be applied selectively to one or more powder layers until the particles comprised in the, or each, layer form and settle into a desired arrangement.

The vibration generation means used by the apparatus 24 may be a mechanical vibration generator or, alternatively, an ultra-sonic vibration generator.

Further, instead of or in addition to the blade and/or vibration generation means, the levelling means may comprise an electrostatic charging means which electrostatically charges both the powder particles and the operative surface 28 with opposed polarities.

For example, a positive charge can be applied to the operative surface 28 and the powder particles exiting the supply 30 can be negatively charged. Thus, as the powder particles exit the supply 30 they are drawn towards the operative surface 28 and, once contact is made therewith, the powder particles stick in place on the operative surface 28.

Advantages of such adhesion is, firstly, that it results in an improved resolution of the final component as the powder particles can be accurately placed and, secondly, that working environment within the printing apparatus 24 is improved as there is less powder particle dust between the supply 30 and the operative surface 28. Further, it is also possible to control the direction of flow of the electrostatically charged powder particles using other electrostatic means.

To enable the apparatus 24 to control the volumetric flow rate and density of airborne powder 34 emitted from the supply hopper 30 and the levelling means described above, the apparatus 24, preferably, also comprises a scanning means (not shown).

The scanning means is, preferably, adapted to determine a position, velocity and/or size of one or more particles comprised in the powder 34 when the, or each, particle is travelling from the supply hopper 30 to the operative surface 28.

The scanning means is, preferably, also adapted to measure the airborne density of the powder 34.

The scanning means is, preferably, also adapted to measure a volume of powder deposited on the operative surface 28.

The scanning means is, preferably, also adapted to measure a level of the powder deposited on the operative surface 28.

The scanning means may make use of an ultra-sonic beam, an electron beam, a laser or other appropriate scanning or positioning technology.

Information and data collected using the scanning means is used, in conjunction with control electronics and software, to determine the volumetric flow rate, direction and/or velocity of powder emitted from the supply hopper 30 and/or the direction and intensity of the energy beams 46,38 to optimise fabrication of the part being printed.

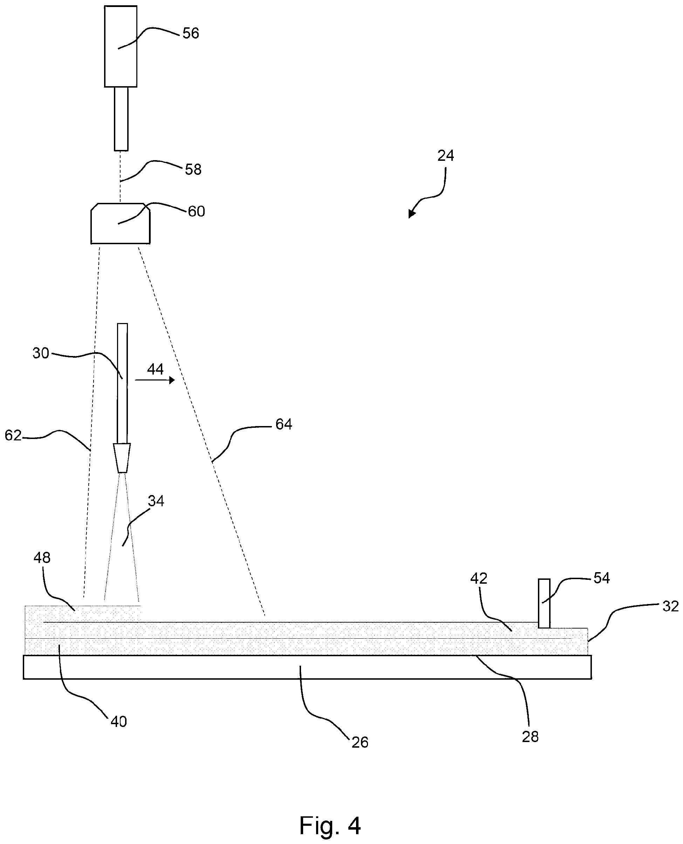

Referring to Figure 4, there is shown a schematic representation of a 3D printing method and apparatus 24 according to a second embodiment of the present invention. The embodiment disclosed is identical in all response to the first embodiment disclosed in Figures 2 and 3 save that the energy source comprises a single energy gun 56 that is adapted to emit a single energy beam 58 onto an energy splitting means 60.

The energy beam splitting means 60 splits the single energy beam 58 into two individual directed energy beams 62,64. The energy beam splitting means 60 operates in conjunction with a control mechanism (not shown) which ensures that each directed energy beam 62,64 emitted from the energy beam splitting means 60 is directed, simultaneously, onto a different exposed surface of a layer of powder 32 in the same manner as described above for the first embodiment of the invention.

## Claims

1. A printing apparatus (24) for printing a three-dimensional object, comprising:
an operative surface (28);
at least one supply hopper (30) for depositing layers of powder (32) onto the operative surface (28); and
an energy source for emitting at least one energy beam (38) onto the layers of powder (32),
**characterised in that** the supply hopper (30) and energy source are configured such that when a topmost layer of powder (40) is being deposited onto an underlying layer of powder (42) on the operative surface (28):
the direction travelled by the supply hopper (30) when depositing the topmost layer (40) is different to the direction travelled by the supply hopper (30) when depositing the underlying layer (42); and
at least one energy beam (38) is emitted onto the topmost layer (40) and at least one further energy beam (46) is emitted onto the underlying layer (42), simultaneously, to melt, fuse or sinter the topmost (40) and underlying layers (42).

2. The printing apparatus (24) according to claim 1, wherein the apparatus (10) further comprises a levelling means for substantially levelling a layer of powder (32) deposited on the operative surface (28).

3. The printing apparatus (24) according to claim 2, wherein the levelling means comprises a blade (54) that is configured to, in use, periodically scrape an uppermost surface of a layer of powder (32) on the operative surface (28).

4. The printing apparatus (24) according to claim 2, wherein the levelling means comprises an electrostatic charging means.

5. The printing apparatus (24) according to claim 2, wherein the levelling means comprises a vibration generation means for applying vibrational forces to particles comprised in a layer of powder (32) on the operative surface (28).

6. The printing apparatus (24) according to claim 5, wherein the vibration generation means comprises a mechanical vibration generator.

7. The printing apparatus (24) according to claim 5, wherein the vibration generation means comprises an ultra-sonic vibration generator.

8. The printing apparatus (24) according to any one of the preceding claims, wherein the apparatus further comprises a scanning means for determining a position, velocity and/or size of one or more particles comprised in the powder (34) when the, or each, particle is travelling between the supply hopper (30) and the operative surface (28).

9. The printing apparatus (24) according to claim 8, wherein the scanning means is adapted to measure the airborne density of the powder (34).

10. The printing apparatus (24) according to claim 8 or 9, wherein the scanning means is adapted to measure a volume of powder (34) deposited on the operative surface (28).

11. The printing apparatus (24) according to any one of claims 8 to 10, wherein the scanning means is adapted to measure a level of the powder (34) deposited on the operative surface (28).

12. The printing apparatus (24) according to any one of claims 8 to 11, wherein the scanning means is adapted to measure a topology of a powder layer (32) or part thereof.

13. The printing apparatus (24) according to any one of claims 8 to 12, wherein the scanning means is adapted to measure a chemical composition of a powder layer (32) or part thereof.

14. The printing apparatus (24) according to any one of claims 8 to 13, wherein the scanning means is adapted to measure a temperature of each powder layer (32) or part thereof.

15. The printing apparatus (24) according to any one of the preceding claims, wherein the apparatus (24) comprises a first energy gun (36) for emitting a first energy beam (38) onto the topmost layer and a second energy gun (52) for simultaneously emitting a second energy beam (46) onto the underlying layer, to melt, fuse or sinter the topmost and underlying layers.

16. The printing apparatus (24) according to any one of claims 1 to 14, wherein the apparatus further comprises an energy beam splitting means (60) for splitting the energy beam into a plurality of separate energy beams and directing at least one energy beam (62) onto the topmost layer and directing at least one further energy beam (64) onto the underlying layer, simultaneously, to melt, fuse or sinter the topmost and underlying layers.

## Patentansprüche

1. Druckvorrichtung (24) zum Drucken eines dreidimensionalen Objekts, umfassend:
eine Wirkfläche (28);
mindestens einen Einlauftrichter (30) zum Absetzen von Schichten aus Pulver (32) auf der Wirkfläche (28); und
eine Energiequelle zum Emittieren von mindestens einem Energiestrahl (38) auf die Schichten aus Pulver (32),
**dadurch gekennzeichnet, dass** der Einlauftrichter (30) und die Energiequelle so ausgestaltet sind, dass, wenn die oberste Schicht aus Pulver (40) auf einer darunter befindlichen Schicht aus Pulver (42) auf der Wirkfläche (28) abgesetzt wird:
die von dem Einlauftrichter (30) durchquerte Richtung, wenn die oberste Schicht (40) abgesetzt wird, sich von der Richtung unterscheidet, die der Einlauftrichter (30) durchquert, wenn die darunter befindliche Schicht (42) abgesetzt wird; und
simultan mindestens ein Energiestrahl (38) auf die oberste Schicht (40) emittiert wird und mindestens ein weiterer Energiestrahl (46) auf die darunter befindliche Schicht (42) emittiert wird, um die oberste (40) und die darunter befindliche Schicht (42) zu schmelzen, zu verschmelzen oder zu sintern.

2. Druckvorrichtung (24) nach Anspruch 1, wobei die Vorrichtung (10) des Weiteren ein Nivelliermittel umfasst, um eine Schicht aus Pulver (32), die auf der Wirkfläche (28) abgesetzt worden ist, im Wesentlichen zu nivellieren.

3. Druckvorrichtung (24) nach Anspruch 2, wobei das Nivelliermittel eine Klinge (54) umfasst, die ausgestaltet ist, um bei Gebrauch periodisch eine oberste Fläche einer Schicht aus Pulver (32) auf der Wirkfläche (28) abzuschaben.

4. Druckvorrichtung (24) nach Anspruch 2, wobei das Nivelliermittel ein elektrostatisches Ladungsmittel umfasst.

5. Druckvorrichtung (24) nach Anspruch 2, wobei das Nivelliermittel ein Vibrationserzeugungsmittel umfasst, um Vibrationskräfte auf Partikel auszuüben, die in einer Schicht aus Pulver (32) auf der Wirkfläche (28) enthalten sind.

6. Druckvorrichtung (24) nach Anspruch 5, wobei das Vibrationserzeugungsmittel einen mechanischen Vibrationserzeuger umfasst.

7. Druckvorrichtung (24) nach Anspruch 5, wobei das Vibrationserzeugungsmittel einen Ultraschallvibrationserzeuger umfasst.

8. Druckvorrichtung (24) nach einem der vorhergehenden Ansprüche, wobei die Vorrichtung des Weiteren ein Scanmittel zum Ermitteln einer Position, Geschwindigkeit und/oder Größe von einem oder mehreren Partikeln umfasst, die in dem Pulver (34) enthalten sind, wenn das oder jedes Partikel sich zwischen dem Einlauftrichter (30) und der Wirkfläche (28) bewegt.

9. Druckvorrichtung (24) nach Anspruch 8, wobei das Scanmittel vorgesehen ist, um die luftgetragene Dichte des Pulvers (34) zu messen.

10. Druckvorrichtung (24) nach Anspruch 8 oder 9, wobei das Scanmittel vorgesehen ist, um das Volumen des Pulvers (34) zu messen, welches auf der Wirkfläche (28) abgesetzt wird.

11. Druckvorrichtung (24) nach einem der Ansprüche 8 bis 10, wobei das Scanmittel vorgesehen ist, um ein Niveau des Pulvers (34) zu messen, das auf der Wirkfläche (28) abgesetzt wird.

12. Druckvorrichtung (24) nach einem der Ansprüche 8 bis 11, wobei das Scanmittel vorgesehen ist, um eine Topologie einer Pulverschicht (32) oder eines Teiles derselben zu messen.

13. Druckvorrichtung (24) nach einem der Ansprüche 8 bis 12, wobei das Scanmittel vorgesehen ist, um eine chemische Zusammensetzung der Pulverschicht (32) oder eines Teiles davon zu messen.

14. Druckvorrichtung (24) nach einem der Ansprüche 8 bis 13, wobei das Scanmittel vorgesehen ist, um eine Temperatur von jeder Pulverschicht (32) oder einem Teil davon zu messen.

15. Druckvorrichtung (24) nach einem der vorhergehenden Ansprüche, wobei die Vorrichtung (24) eine erste Energiekanone (36) zum Emittieren eines ersten Energiestrahls (38) auf die oberste Schicht und eine zweite Energiekanone (52) zum simultanen Emittieren eines zweiten Energiestrahls (46) auf die darunter befindliche Schicht umfasst, um die oberste und darunter befindliche Schichten zu schmelzen, zu verschmelzen oder zu sintern.

16. Druckvorrichtung (24) nach einem der Ansprüche 1 bis 14, wobei die Vorrichtung des Weiteren ein Energiestrahl-Splittermittel (60) umfasst, um den Energiestrahl in eine Vielzahl separater Energiestrahle zu splitten, und simultan mindestens einen Energiestrahl (62) auf die oberste Schicht zu richten und mindestens einen weiteren Energiestrahl (64) auf die darunter befindliche Schicht zu richten, um die oberste und darunter befindlichen Schichten zu schmelzen, zu verschmelzen oder zu sintern.

## Revendications

1. Appareil d'impression (24) pour imprimer un objet tridimensionnel comprenant :
une surface fonctionnelle (28) ;
au moins une trémie d'alimentation (30) pour déposer des couches de poudre (32) sur la surface fonctionnelle (28) ; et
une source d'énergie pour émettre au moins un faisceau d'énergie (38) sur les couches de poudre (32),
**caractérisé en ce que** la trémie d'alimentation (30) et la source d'énergie sont configurées de telle sorte que, lorsque la couche la plus haute de poudre (40) est déposée sur une couche sous-jacente de poudre (42) sur la surface fonctionnelle (28) :
la direction de déplacement de la trémie d'alimentation (30) lors du dépôt de la couche la plus haute (40) soit différente de la direction de déplacement de la trémie d'alimentation (30) lors du dépôt de la couche sous-jacente (42) ; et
au moins un faisceau d'énergie (38) soit émis sur la couche la plus haute (40) et au moins un faisceau d'énergie supplémentaire (46) soit émis sur la couche sous-jacente (42), en même temps, pour faire fondre, fusionner ou fritter la couche la plus haute (40) et la couche sous-jacente (42).

2. Appareil d'impression (24) selon la revendication 1, l'appareil (10) comprenant en outre un moyen de nivellement pour niveler sensiblement une couche de poudre (32) déposée sur la surface fonctionnelle (28).

3. Appareil d'impression (24) selon la revendication 2, dans lequel le moyen de nivellement comprend une lame (54) qui est configurée pour, lors de l'utilisation, racler périodiquement une surface supérieure d'une couche de poudre (32) sur la surface fonctionnelle (28).

4. Appareil d'impression (24) selon la revendication 2, dans lequel le moyen de nivellement comprend un moyen de charge électrostatique.

5. Appareil d'impression (24) selon la revendication 2, dans lequel le moyen de nivellement comprend un moyen de génération de vibrations pour appliquer des forces vibratoires à des particules incluses dans une couche de poudre (32) sur la surface fonctionnelle (28).

6. Appareil d'impression (24) selon la revendication 5, dans lequel le moyen de génération de vibrations comprend un générateur de vibrations mécaniques.

7. Appareil d'impression (24) selon la revendication 5, dans lequel le moyen de génération de vibrations comprend un générateur de vibrations ultrasonores.

8. Appareil d'impression (24) selon l'une quelconque des revendications précédentes, l'appareil comprenant en outre un moyen de balayage pour déterminer une position, une vitesse et/ou une taille d'une ou de plusieurs particules incluses dans la poudre (34) lorsque la particule, ou chaque particule, se déplace entre la trémie d'alimentation (30) et la surface fonctionnelle (28) .

9. Appareil d'impression (24) selon la revendication 8, dans lequel le moyen de balayage est conçu pour mesurer la densité de la poudre (34) en suspension dans l'air.

10. Appareil d'impression (24) selon la revendication 8 ou 9, dans lequel le moyen de balayage est conçu pour mesurer un volume de poudre (34) déposé sur la surface fonctionnelle (28).

11. Appareil d'impression (24) selon l'une quelconque des revendications 8 à 10, dans lequel le moyen de balayage est conçu pour mesurer un niveau de la poudre (34) déposée sur la surface fonctionnelle (28).

12. Appareil d'impression (24) selon l'une quelconque des revendications 8 à 11, dans lequel le moyen de balayage est conçu pour mesurer une topologie d'une couche de poudre (32) ou d'une partie de celle-ci.

13. Appareil d'impression (24) selon l'une quelconque des revendications 8 à 12, dans lequel le moyen de balayage est conçu pour mesurer une composition chimique d'une couche de poudre (32) ou d'une partie de celle-ci.

14. Appareil d'impression (24) selon l'une quelconque des revendications 8 à 13, dans lequel le moyen de balayage est conçu pour mesurer une température de chaque couche de poudre (32) ou d'une partie de celle-ci.

15. Appareil d'impression (24) selon l'une quelconque des revendications précédentes, l'appareil (24) comprenant un premier pistolet à énergie (36) pour émettre un premier faisceau d'énergie (38) sur la couche la plus haute et un second pistolet à énergie (52) pour émettre en même temps un second faisceau d'énergie (46) sur la couche sous-jacente, pour faire fondre, fusionner ou fritter la couche la plus haute et la couche sous-jacente.

16. Appareil d'impression (24) selon l'une quelconque des revendications 1 à 14, l'appareil comprenant en outre un moyen de division de faisceau d'énergie (60) pour diviser le faisceau d'énergie en une pluralité de faisceaux d'énergie distincts et pour diriger au moins un faisceau d'énergie (62) sur la couche la plus haute et pour diriger au moins un faisceau d'énergie supplémentaire (64) sur la couche sous-jacente, en même temps, pour faire fondre, fusionner ou fritter la couche la plus haute et la couche sous-jacente.
